# EUROPÄISCHE PATENTSCHRIFT

(11) **EP 1 520 115 B1**
(45) Veröffentlichungstag und Bekanntmachung des Hinweises auf die Patenterteilung: **26.04.2006**
(21) Anmeldenummer: 03762541.5
(22) Anmeldetag: 28.06.2003
(51) Int. Cl.: F16D 23/06

(54) **SCHIEBEMUFFE EINER SCHALTKUPPLUNG**
SLIDING SLEEVE ON A SYNCHRONISER
MANCHON BALADEUR POUR UN EMBRAYAGE

(30) Priorität: 04.07.2002 DE 10229911
(43) Veröffentlichungstag der Anmeldung: 06.04.2005
(73) Patentinhaber: Schaeffler KG, 91074 Herzogenaurach (DE)
(72) Erfinder: WIESSNER, Gerd, 91413 Neustadt/Aisch (DE); SCHWAB, Jürgen, 91341 Röttenbach (DE); BERTELSHOFER, Thomas, 91320 Ebermannstadt (DE)
(86) Internationale Anmeldenummer: PCT/EP2003/006871
(87) Internationale Veröffentlichungsnummer: WO 2004/005740

(56) Entgegenhaltungen:
- EP-A- 0 500 408
- AT-B- 172 737
- DE-A- 10 053 031
- DE-A- 19 820 654
- FR-A- 2 783 027

## Beschreibung

### Gebiet der Erfindung

Die Erfindung betrifft eine Schiebemuffe einer Schaltkupplung zum Übertragen von Drehmomenten zwischen einem um eine Drehachse drehbaren Getriebeelement und einer um die Drehachse drehbaren Kupplungsverzahnung, die Schiebemuffe mit einem Grundkörper aus einem kreisrundgebogenen sowie ein Zahnprofil aus mehreren in Umfangsrichtung zueinander benachbarten Zähnen aufweisenden Blechstreifen, wobei der Grundkörper mit einer zwischen einem ersten Zahn und einem zweiten Zahn gelegene Verbindung der zusammengeführten Enden des kreisrundgebogenen Blechstreifens versehen ist und wobei die Schiebemuffe zum Übertragen der Drehmomente mittels des Zahnprofils, zeitgleich in eine Verzahnung an dem Muffenträger und in die Kupplungsverzahnung eingreifend, den Muffenträger und die Kupplungsverzahnung drehfest miteinander verbindet.

### Hintergrund der Erfindung

DE 198 20 654 A1 zeigt eine Schiebemuffe der gattungsbildenden Art. Auf einem Grundkörper der Schiebemuffe ist eine Schaltgabelführung in Form von einem oder zwei Ringen befestigt. Der Grundkörper ist aus einem Blechstreifen gefertigt,
- der in seinem Ausgangszustand zumindest einseitig profiliert ist,
- der vor oder nach dem Profilieren, z. B. von einem Bandmaterial, auf eine seinem späteren Umfang entsprechende Länge abgeschnitten ist,
- der nach dem Abschneiden kreisrund gebogen ist, wobei die Enden mit den Schnittkanten des Blechstreifens aufeinander zugebogen und zusammengeführt sind und
- bei dem schließlich die zusammengeführten Enden aneinander befestigt sind.

In dem Blechstreifen ist das Zahnprofil einprofiliert, das alle Elemente einer Verzahnung einer Schiebemuffe mit beispielsweise den Dachschrägen, den Hinterschnitten sowie mit den Ausnehmungen für Rast- bzw. Druckstücke enthalten kann. Die zusammengeführten Enden sind durch Schweißen aneinander befestigt. Diese Verbindung ist an der Basis des Grundkörpers in der Lücke zwischen zwei einander benachbarten Zähnen des Zahnprofils hergestellt. Eine derartige Schiebemuffe lässt sich kostengünstig herstellen. Die Vorteile der Schiebemuffe, insbesondere die Vorteile bei ihrer Herstellung, sind in DE 198 20 654 A1 ausführlich beschrieben.

Die Schiebemuffe ist als ein Kupplungselement in einer Schaltkupplung eines Schaltgetriebes eingesetzt. Mit der Schiebemuffe ist eine Drehmomente- bzw. Leistungsflüsse übertragende Verbindung zwischen zwei durch die Schiebemuffe kuppelbaren Getriebeelementen herstellbar. Dazu sitzt die Schiebemuffe beispielsweise auf einem der Fachwelt bekannten Muffenträger einer Schaltkupplung mit den üblicherweise verwendeten Einfach- oder Mehrfach-Synchronisiereinheiten. Wenn ein Gangrad geschaltet ist, greift die Schaltmuffe zeitgleich mit einem Anteil des Zahnprofils in eine Verzahnung des Muffenträgers sowie mit einem weiteren Anteil in eine mit dem Gangrad drehfest gekoppelte Kupplungsverzahnung ein und überträgt somit den Leistungsfluss zwischen der Getriebewelle und dem Zahnrad. Die dabei durch die Schiebemuffe zu übertragenden Drehmomente werden an den ineinandergreifenden Zähnen der miteinander gekoppelten Getriebeelemente in Kräfte umgesetzt.

Jeder der Zähne des Zahnprofils ist mit seinen Flanken längs zu der Drehachse ausgerichtet und weist jeweils einen Anteil auf, der in eine Lücke der Kupplungsverzahnung eingreift, einen anderen der ohne verzahnenden Kontakt den Abstand längs zwischen dem Muffenträger und der Kupplungsverzahnung überbrückt und einen weiteren, der in eine Zahnlücke der Kupplungsverzahnung eingreift. Die durch den Abstand vom Kraftangriff an jedem einzelnen Zahn zur Zahnwurzel erzeugten Momente an den beiden in die Gegenverzahnungen eingreifenden der Anteile rufen Spannungen in dem Zahnfuß der Zähne und damit in der Basis des Grundkörpers hervor. Diese Spannungen sind an dem Anteil des Zahnprofils, der in die Kupplungsverzahnung eingreift, zumeist höher als die Spannungen des Anteils, der mit der Verzahnung des Muffenträgers im Eingriff steht, da die Zähne und damit die Kontaktzonen der Kupplungsverzahnung längs zur Drehachse in der Regel schmaler sind als die Zähne der Verzahnung des Muffenträgers.

Die Fachwelt ist in der Regel bemüht, ein Getriebe und damit seine Einzelteile so klein und leicht wie möglich zu bauen. Dieses Ziel lässt sich häufig an den Schiebemuffen der gattungsbildenden Art nach dem heutigen Stand der Technik nur schwer verwirklichen, da die Basis des Grundkörpers einer derartigen Schiebemuffe aufgrund der genannten Spannungen sehr solide ausgebildet sein muss. Die Verbindung der Enden des Blechstreifens ist besonders gefährdet. Insbesondere die Spannungen in der Basis aus der elastischen Verlagerung der Zahnköpfe der beiden zur Verbindung benachbarten Zähne des Zahnprofils zusammen mit den in Umfangsrichtung in der Basis verlaufenden Hauptspannungen können bei einer zu geringen Wandstärke des Grundkörpers bzw. der Basis, zum Aufbrechen der Verbindung an dem Anteil des Zahnprofils führen, der in die Kupplungsverzahnung eingreift. Die Zähne und die Basis weisen deshalb Wandstärken auf, deren Material massiv genug ist um das Verschieben der Zahnköpfe weitestgehend zu vermeiden und deren Querschnitte groß genug sind um die Spannungen auf ein erträgliches Maß zu reduzieren. Die Zähne und die Basis des Grundkörpers und damit die Schiebemuffe sind deshalb an sich überdimensioniert.

### Zusammenfassung der Erfindung

Die Aufgabe der Erfindung ist es daher, eine Schiebemuffe für eine Schaltkupplung eines Fahrzeuggetriebes mit optimierten Abmessungen zu schaffen, bei der die Vorteile der Schiebemuffe der gattungsbildenden Art weiterhin bestehen bleiben und die darüber hinaus leichter ist und geringere Abmessungen aufweist.

Diese Aufgabe ist nach dem Gegenstand des kennzeichnenden Teils des Anspruchs 1 dadurch gelöst, dass das Zahnprofil an dem Grundkörper der Schiebemuffe mindestens eine erste Gruppe an Zähnen und eine zweite Gruppe an Zähnen aufweist, die sich voneinander nach ihrem Eingriff beim Übertragen der Drehmomente unterscheiden. Die Zähne der ersten Gruppe greifen beim Übertragen der Drehmomente durch die Schiebemuffe - zeitgleich zu dem Eingriff der Zähne der zweiten Gruppe in die Kupplungsverzahnung - nur in die Verzahnung an dem Schaltmuffenträger ein. Der erste Zahn und der zweite Zahn, zwischen denen in Umfangsrichtung des Grundkörpers die Verbindung der Enden des Blechstreifens angeordnet ist, gehören in jedem Fall zu den Zähnen der ersten Gruppe. Die Zähne der zweiten Gruppe greifen beim Übertragen der Drehmomente durch die Schiebemuffe - zeitgleich zu dem Eingriff der Zähne der ersten Gruppe in die Verzahnung an dem Schaltmuffenträger - zumindest in die Kupplungsverzahnung ein. Es ist auch mit einer Ausgestaltung der Erfindung vorgesehen, dass die Zähne der zweiten Gruppe beim Übertragen der Drehmomente durch die Schiebemuffe - zeitgleich zu dem Eingriff der Zähne der ersten Gruppe in die Verzahnung an dem Schaltmuffenträger - sowohl in die Kupplungsverzahnung als auch in die Verzahnung an dem Schaltmuffenträger eingreifen.

Die erste Gruppe ist alternativ entweder nur aus dem ersten und dem zweiten Zahn (die zu der Verbindung unmittelbar benachbarten Zähne) gebildet oder weist noch weitere Zähne auf, die nur mit der Verzahnung an dem Schaltmuffenträger im Eingriff stehen. Die weiteren dieser Zähne sind beispielsweise entweder in Umfangsrichtung der Verzahnung betrachtet zu dem ersten bzw. zweiten Zahn benachbart oder, z. B. sich mit Zähnen der zweiten Gruppe abwechselnd, am Umfang der Verzahnung verteilt angeordnet.

Die Erfindung betrifft sowohl Schiebemuffen, die direkt auf einem Getriebeelement in Form einer Getriebewelle, als auch auf einem auf der Getriebewelle sitzenden Getriebeelemente in Form eines Muffenträgers angeordnet sind. Die Kupplungsverzahnung ist einem Gangrad oder einem weiteren beliebigen Getriebeelement, wie z. B. einer mit der Getriebewelle über die Schaltkupplung kuppelbaren weiteren Welle, zugeordnet. Die Erfindung betrifft auch Schiebemuffen mit einem Zahnprofil, das sowohl in Umfangsrichtung als auch längs der Drehachse der Schaltkupplung zueinander benachbart angeordnete Zähne der ersten Gruppe oder der zweiten Gruppe bzw. der ersten und der zweiten Gruppe aufweist.

Die Erfindung erfasst auch:
- Schiebemuffen mit Zähnen für den radial nach innen gerichteten Eingriff in die Verzahnung eines Muffenträgers oder in die Verzahnung an einer Getriebewelle,
- Schiebemuffen mit Zähnen für den axialgerichteten Eingriff in eine Kupplungsverzahnung mit gleichgerichtet zu der Drehachse hervorstehenden Zähnen,
- Schiebemuffen mit Zähnen für den radial nach außen gerichteten Eingriff der Zähne in eine radial nach innen gerichtete Kupplungsverzahnung und
- Schiebemuffen mit allen denkbaren Kombinationen der Verzahnungsausrichtung und Anordnung gemäß der vorgenannten Beispiele.

Unter Zahnprofil, Verzahnung und unter Zähnen sind in dieser Erfindung alle Arten und Ausführungen von Keilen bzw. Keilprofilen, Klauen und Kerbverzahnungen zu verstehen, die für eine trennbare formschlüssige Verbindung zum Übertragen von Drehmomenten zwischen zwei kuppelbaren Getriebeelementen geeignet sind.

Die unmittelbar zu der Verbindung benachbarten Zähne greifen gemäß der Erfindung bei der Übertragung von Drehmomenten nicht in die Kupplungsverzahnung ein. Die Basis des Grundkörpers ist demnach in unmittelbarer Nähe der Verbindung nicht durch die Spannungen aus der elastischen Verlagerung der Zahnköpfe der beiden sich der Verbindung anschließenden Zähne sondern im Wesentlichen nur noch mit den in Umfangsrichtung in der Basis verlaufenden Hauptspannungen belastet. Die Gefahr, dass die Verbindung aufgrund der im Grundkörper herrschenden Spannungen aufbricht, ist stark gemindert. Eine optimale raum- und gewichtssparende Gestaltung der Schiebemuffe ist möglich.

### Kurze Beschreibung der Zeichnungen

Die Erfindung wird nachfolgend anhand von Ausführungsbeispielen näher erläutert. Es zeigen:
- Figur 1: ein Ausführungsbeispiel der erfindungsgemäßen Schiebemuffe,
- Figur 2: eine Schaltkupplung zum wahlweisen Schalten von zwei Gangrädern mittels eines Ausführungsbeispieles der erfindungsgemäßen Schiebemuffe, wobei die Schiebemuffe in einer Position dargestellt ist, in der mittels der Schiebemuffe Drehmomente zwischen dem Gangrad und einer Getriebewelle übertragbar sind,
- Figur 3: eine schematische Darstellung der im Eingriff stehenden Verzahnungen der Schaltkupplung nach Figur 2,
- Figur 4: eine schematische Darstellung der Zähne eines Ausführungsbeispiels der Schiebemuffe,
- Figur 5: die schematische Darstellung von Zähnen eines weiteren Ausführungsbeispiels einer Schiebemuffe und
- Figur 6: eine alternative Gestaltung der Verbindung der Enden des Blechstreifens.

### Detaillierte Beschreibung der Zeichnungen

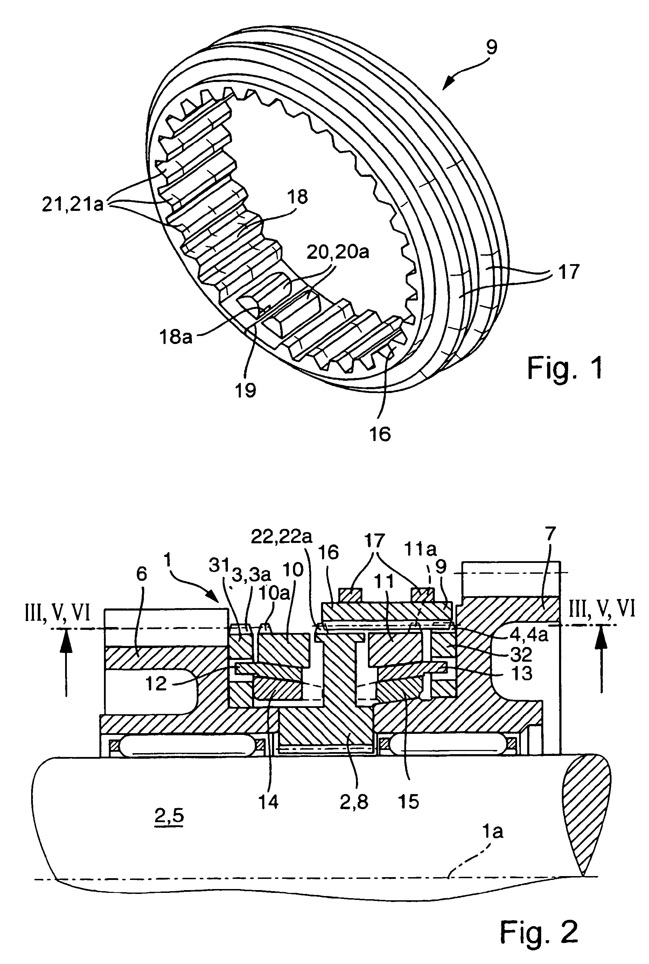

Figur 2 zeigt eine Schaltkupplung 1 zum wahlweisen Übertragen von Drehmomenten zwischen einem Getriebeelement 2 in Form einer Getriebewelle 5 und Kupplungsverzahnungen 3 bzw. 4. Die Kupplungsverzahnungen 3, 4 sind aus radial von der Drehachse 1a der Schaltkupplung 1 wegweisenden Zähnen 3a, 4a an jeweils einer Kupplungsscheibe 31 bzw. 32 gebildet. Jede der Kupplungsscheiben 31, 32 sitzt fest an jeweils einem Gangrad 6 bzw. 7. Die Gangräder 6, 7 sind drehbar auf der Getriebewelle 5 gelagert. Auf der Getriebewelle 5 und zwischen den Gangrädern 6 und 7 sitzt verdrehfest zu der Getriebewelle 5 ein weiteres Getriebeelement 2 in Form eines Muffenträgers 8. Der Muffenträger 8 nimmt eine Schiebemuffe 9 mit den Merkmalen der Erfindung auf. Längs zwischen dem Muffenträger 8 und dem jeweiligen Gangrad 6 und 7 ist jeweils ein Paket Synchronringe aus einem äußeren Synchronring 10, 11, einem Zwischenring 12, 13 und einem inneren Synchronring 14, 15 angeordnet. Die äußeren Synchronringe 10, 11 weisen jeweils die üblichen Sperrzähne 10a und 11a der synchronisierten Schaltkupplung 1 auf.

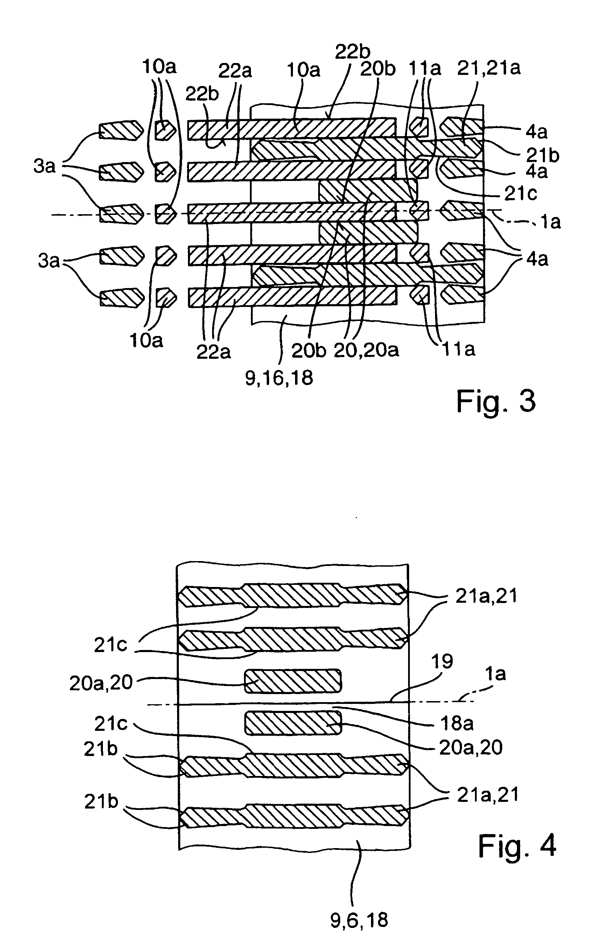

Figur 1 zeigt eine Gesamtansicht der Schiebemuffe 9. Die Schiebemuffe 9 ist aus einem Grundkörper 16 und einer Führung aus zwei Ringen 17 für den Eingriff einer nicht dargestellten Schaltgabel gebildet. Der Grundkörper 16 ist aus einem Blechstreifen mit einem Zahnprofil 18 gefertigt, der zunächst in seinem flachen Ausgangszustand mit dem Zahnprofil 18 versehen ist, der anschlie-βend kreisrund gebogen ist und bei dem schließlich die durch das Biegen zusammengeführten Enden 16a mit einer Verbindung 19 durch Schweißen aneinandergefügt sind. Das Zahnprofil 18 weist zwei Gruppen 20 und 21 von Zähnen 20a bzw. 21a auf, die sich in der Schaltkupplung 1 nach ihrem Eingriff beim Übertragen der Drehmomente unterscheiden. Die erste Gruppe 20 ist durch einen ersten und einen zweiten Zahn 20a gebildet, zwischen denen in Umfangsrichtung gesehen die Verbindung 19 liegt. Die Verbindung 19 ist in einer Lücke 18a in der Basis des Grundkörpers 16 zwischen den Zahnfüßen der Zähne 20a hergestellt. Die zweite Gruppe 21 ist aus den Zähnen 21 a gebildet, die mit den Merkmalen der Dachschrägen 21b (Figur 3) den hinterschnittenen Zahnflanken 21c (Figur 3) und weiteren möglichen Merkmalen an einer Verzahnung der üblichen Schiebemuffen versehen sind.

Die Schiebemuffe 9 greift ständig mit den radial nach innen gerichteten Zähnen 20a und 21a in Zähne 22a einer radial nach außen gerichteten Verzahnung 22 an dem Muffenträger 8 ein. Die Flanken 20b bzw. 21c der Zähne 20a bzw. 21a des Zahnprofils 18 und die Flanken 22b der Zähne 22a der Verzahnung 22 sind längs zu der Drehachse 1a ausgerichtet (Figur 3), so dass die Schiebemuffe 9 auf dem Muffenträger 8 in Umfangsrichtung zu dem Muffenträger 8 drehfest sowie wahlweise in Richtung eines der Gangräder 6 und 7 verschiebbar ist. In Figur 2 ist die Schiebemuffe 9 in einer Position auf dem Muffenträger 8 dargestellt, in der das Gangrad 7 mit der Schaltkupplung 1 geschaltet und damit drehfest mit der Getriebewelle 5 verbunden ist. Das Zahnprofil 18 greift dazu zeitgleich in die Verzahnung 22 und in die Kupplungsverzahnung 4 ein.

In Figur 3 ist ein Ausschnitt einer Abwicklung der miteinander verzahnten Zähne 20a, 21a und 22a sowie 4a in der Schnittebene III-III aus Figur 2 schematisch dargestellt. Die Zähne 21a der zweiten Gruppe 21 greifen beim Übertragen der Drehmomente in der Schaltkupplung 1 jeweils mit einem Anteil zwischen die Zähne 22a an dem Muffenträger 8, überbrücken jeweils mit einem Anteil den Abstand zwischen dem Muffenträger 8 sowie der Kupplungsverzahnung 4 und greifen jeweils mit einem weiteren Anteil zwischen die Zähne 4a. Die Zähne 20a der ersten Gruppe 20 an dem Zahnprofil 18 greifen sowohl in der nicht dargestellten neutralen Stellung der Schiebemuffe 9 auf dem Muffenträger 8 als auch bei der Übertragung der Drehmomente durch die Schiebemuffe 9 nur zwischen die Zähne 22a.

Figur 4 zeigt nur die Abwicklung des Grundkörpers 16 in der Schnittebene III-III aus Figur 2 mit der Verbindung 19 der beiden Enden 16a. Die Verbindung 19 ist mittels einer durchgehenden und längs mit der Drehachse 1a verlaufenden Schweißnaht hergestellt. An die Verbindung 19 schließen sich beidseitig, in Umfangsrichtung der Verzahnung 22 gesehen, die Zähne 20a der ersten Gruppe 20a an, denen mehrere zueinander benachbarte Zähne 21a der zweiten Gruppe 21 folgen.

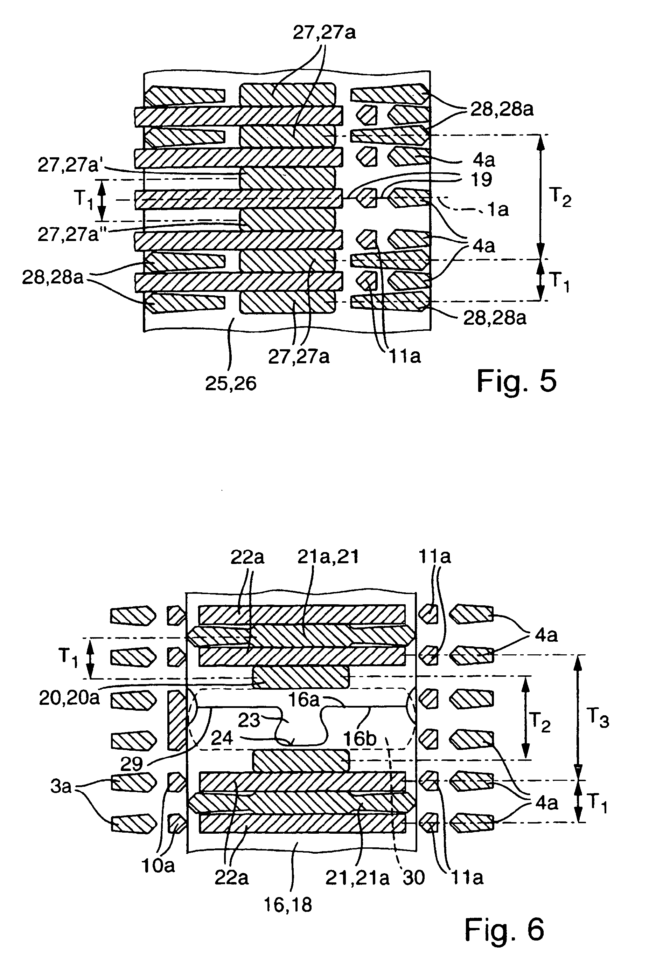

In Figur 5 ist ein Ausschnitt eines zu dem in Figur 1 und Figur 4 alternativ gestalteten Grundkörper 25 der nicht weiter dargestellten Schiebemuffe 9 in der Schnittebene V-V aus Figur 2 schematisch dargestellt. Ein Zahnprofil 26 weist zwei Gruppen 27 und 28 an Zähnen 27a, 27a' und 28a auf, die sich in der Schaltkupplung 1 wenigstens nach ihrem Eingriff beim Übertragen der Drehmomente unterscheiden. Die erste Gruppe 27 ist mit den Zähnen 27a versehen, die mit einer gleichmäßigen Teilung T₁zueinander am Umfang des Zahnprofils 26 ausgebildet sind. Zwischen einem ersten Zahn 27a' und einem zweiten Zahn 27a" der Zähne 27a liegt die Verbindung 19. Die zweite Gruppe 28 weist die Zähne 28a auf, von denen jeweils zwei der Zähne 28a je einen Zahn 27a längs der Drehachse 1a zwischen sich nehmen. Zu den Zähnen 27a' und 27a" ist längs keiner der Zähne 28a benachbart, so dass an der Verbindung 19 in Umfangsrichtung zwischen den Zähnen 28 eine Lücke ausgebildet ist. Der Abstand T₂ zwischen den Längsmittelachsen der die Lücke begrenzenden Zähne 28a entspricht dem Dreifachen des Abstandes T₁ zwischen den Längsmittelachsen der übrigen Zähne 28a. Die eine, dem nicht geschalteten Gangrad 6 nahe, der beiden Reihen der Zähne 28a der zweiten Gruppe 28 greift beim Übertragen der Drehmomente in der Schaltkupplung 1 zusammen mit den Zähnen 27a, 27a' und 27a" der ersten Gruppe 27 jeweils zwischen die Zähne 22a an dem Muffenträger 8. Die andere dem geschalteten Gangrad 7 nahe, der beiden Reihen der Zähne 28a der zweiten Gruppe 28, greift beim Übertragen der Drehmomente in die Zähne 4a der Kupplungsverzahnung 4 ein.

Figur 6 zeigt einen Ausschnitt des Grundkörpers 16 der Schiebemuffe 9 mit einer alternativ gestalteten Verbindung 29 in der Schnittebene VI-VI aus Figur 2. Das Zahnprofil 18 weist die erste Gruppe 20 mit den Zähnen 20a und die zweite Gruppe 21 mit den Zähnen 21 a auf. In der Darstellung nach Figur 6 ist keines der Gangräder 6 oder 7 geschaltet. Sowohl die erste Gruppe 20 und die zweite Gruppe 21 greifen in dieser Schaltstellung nur in die Verzahnung 22 an dem Muffenträger 8 ein. Die Verzahnung 22 an dem Muffenträger 8 ist unterhalb der Verbindung 19 an der Schaltmuffe 9 von einer Lücke durch zwei fehlende der Zähne 22 unterbrochen. Zwischen den Längsmittelachsen der die Lücke in Umfangsrichtung begrenzenden Zähne 22a ist ein Abstand T₃ ausgebildet. Der Abstand T₃ entspricht dem Dreifachen des Abstandes T₁ zwischen den Längsmittelachsen der übrigen der Zähne 22a. Zwischen den Zähnen 20a der ersten Gruppe 20 ist für die Verbindung 29 ein Abstand T₂ ausgebildet, der dem Zweifachen des Abstandes T₁ der Zähne 21 a bzw. 22a der zweiten Gruppe 21 bzw. der Verzahnung 22 entspricht. Die so entstehende Lücke in der Verzahnungen ist für die Aufnahme eines in Figur 6 gestrichelt angedeuteten Druckstückes 30 zum Betätigen des äußeren Synchronrings 11 mit den Sperrzähnen 11a vorgesehen.

Die Enden 16a und 16b des Grundkörpers 16 nach Figur 6 sind mit einer Paarung aus formschlüssig zueinander passenden und ineinander eingehängten Elementen 23, 24 verbunden. Das erste Element 23 steht über die Schnittkante an dem Ende 16a hervor und das zweite Element 24 ist als Ausnehmung in das Ende 16b eingebracht. Das erste Element 23 ist in das zweite Element 24 so eingehakt, dass die Elemente 23, 24 formschlüssig zumindest tangential und gleichgerichtet zu der Drehachse 1a aneinander liegen. Zusätzlich ist die Verbindung 29 mittels Schweißungen gesichert.

### Bezugszeichen

- 1: Schaltkupplung
- 1a: Drehachse
- 2: Getriebeelement
- 3: Kupplungsverzahnung
- 3a: Zahn
- 4: Kupplungsverzahnung
- 4a: Zahn
- 5: Getriebewelle
- 6: Gangrad
- 7: Gangrad
- 8: Muffenträger
- 9: Schiebemuffe
- 10: Synchronring
- 10a: Sperrzahn
- 11: Synchronring
- 11a: Sperrzahn
- 12: Synchronring
- 13: Synchronring
- 14: Synchronring
- 15: Synchronring
- 16: Grundkörper
- 16a: Ende
- 16b: Ende
- 17: Ring
- 18: Zahnprofil
- 18a: Lücke
- 19: Verbindung
- 20: Gruppe
- 20a: Zahn
- 20b: Flanke
- 21: Gruppe
- 21a: Zahn
- 21b: Dachschräge
- 21c: Zahnflanke
- 22: Verzahnung
- 22a: Zahn
- 22b: Flanke
- 23: Element
- 24: Element
- 25: Grundkörper
- 26: Zahnprofil
- 27: Gruppe
- 27a: Zahn
- 28: Gruppe
- 28a: Zahn
- 29: Verbindung
- 30: Druckstück
- 31: Kupplungsscheibe
- 32: Kupplungsscheibe

## Patentansprüche

1. Schiebemuffe (9) einer Schaltkupplung (1) zum Übertragen von Drehmomenten zwischen einem um eine Drehachse (1a) drehbaren Getriebeelement (2) und einer um die Drehachse (1a) drehbaren Kupplungsverzahnung (3, 4), wobei die Schiebemuffe (9) einen Grundkörper (16, 25) aus einem kreisrund gebogenen sowie ein Zahnprofil (18, 26) aus mehreren zumindest in Umfangsrichtung zueinander benachbarten Zähnen (20a, 21a, 22a, 27a, 28a) aufweisenden Blechstreifen aufweist, wobei der Grundkörper (16, 25) mit einer zwischen einem ersten Zahn (20a, 27a) und einem zweiten Zahn (20a, 27a) gelegenen Verbindung (19, 29) der zusammengeführten Enden (16a, 16b) des kreisrund gebogenen Blechstreifens versehen ist und wobei die Schiebemuffe (9) zum Übertragen der Drehmomente mittels des Zahnprofils (18, 26) zeitgleich in eine Verzahnung (22) an dem Getriebeelement (2) und in die Kupplungsverzahnung (3, 4) eingreifend das Getriebeelement (2) und die Kupplungsverzahnung (3, 4) drehfest miteinander verbindet, **dadurch gekennzeichnet, dass** das Zahnprofil (18, 26) mindestens eine erste Gruppe (20, 27) an Zähnen (20a, 27a) und eine zweite Gruppe (21, 28) an Zähnen (21a, 28a) aufweist, wobei die Gruppen (20, 21, 27, 28) der Zähne (20a, 21a, 27a, 28a) sich voneinander wenigstens durch ihren Eingriff beim Übertragen der Drehmomente unterscheiden wobei die Zähne (20a, 27a) der ersten Gruppe (20, 27) nur in die Verzahnung (22) an dem Getriebeelement (2) und die Zähne (21a, 28a) der zweiten Gruppe (21, 28) zumindest in die Kupplungsverzahnung (3, 4) eingreifen und dass die erste Gruppe (20, 27) zumindest aus dem ersten Zahn (20a, 27a) und aus dem zweiten Zahn (20a, 27a) gebildet ist.

2. Schiebemuffe nach Anspruch 1, **dadurch gekennzeichnet, dass** die Zähne (21a, 28a) der zweiten Gruppe (21, 28) beim Übertragen der Drehmomente in die Verzahnung (22) und in die Kupplungsverzahnung (3, 4) gleichzeitig eingreifen.

3. Schiebemuffe nach Anspruch 1, **dadurch gekennzeichnet, dass** das Zahnprofil (18, 26) radial nach innen weisende Zähne (20a, 21a 27a, 28a) aufweist die im Gebrauch mit radial nach außen weisenden Zähne (22a) der Verzahnung (22) eingreifen.

4. Schiebemuffe nach Anspruch 1 oder 2 , **dadurch gekennzeichnet, dass** das Zahprofil (18, 26) radial nach innen weisende Zähne (20a, 21a, 27a, 28a) aufweist die im Gebrauch mit radial nach außen weisende Zähne (3a, 4a) der Kupplungsverzahnung (3, 4) eingreifen.

5. Schiebemuffe nach Anspruch 1, **dadurch gekennzeichnet, dass** die Verbindung (19) eine Schweißverbindung ist.

6. Schiebemuffe nach Anspruch 1, **dadurch gekennzeichnet, dass** die Verbindung (29) zumindest eine Kombination aus einem Formschluss und einer Schweißverbindung ist.

7. Schaltkupplung mit einer Schiebemuffe nach Anspruch 1, **dadurch gekennzeichnet, dass** das Getriebeelement (2) ein auf einer Schaltwelle (5) sitzender Muffenträger (8) ist und dass die Kupplungsverzahnung (3, 4) einem mit der Schaltkupplung (1) schaltbaren Gangrad (6, 7) verdrehfest zugeordnet ist.

## Claims

1. Sliding sleeve (9) of a gearshift clutch (1) for transmitting torques between a transmission element (2) that can rotate about an axis of rotation (1a) and a clutch gearing (3, 4) that can rotate about the axis of rotation (1a), said sliding sleeve (9) comprising a base body (16, 25) made out of a sheet metal strip that is bent into a circular shape and comprises a tooth profile (18, 26) consisting of a plurality of teeth (20a, 21a, 22a, 27a, 28a) that are adjacent to one another at least in peripheral direction, said base body (16, 25) being provided with a joint (19, 29) of the brought-together ends (16a, 16b) of the circularly bent sheet metal strip, which joint (19, 29) is situated between a first tooth (20a, 27a) and a second tooth (20a, 27a), and said sliding sleeve (9), for the purpose of transmitting the torques, engaging by means of the tooth profile (18, 26) simultaneously into a gearing (22) on the transmission element (2) and into the clutch gearing (3, 4) thus connecting the transmission element (2) and the clutch gearing (3, 4) rotationally fast to each other, **characterised in that** the tooth profile (18, 26) comprises at least a first group (20, 27) of teeth (20a, 27a) and a second group (21, 28) of teeth (21 a, 28a), the groups (20, 21, 27, 28) of the teeth (20a, 21 a, 27a, 28a) differ from each other at least in their engagement during the transmission of the torques, the teeth (20a, 27a) of the first group (20, 27) engaging only into the gearing (22) on the transmission element (2) and the teeth (21 a, 28a) of the second group (21, 28) engaging at least into the clutch gearing (3, 4), and the first group (20, 27) is formed at least by the first tooth (20a, 27a) and the second tooth (20a, 27a).

2. Sliding sleeve according to claim 1, **characterised in that**, during the transmission of the torques, the teeth (21 a, 28a) of the second group (21, 21) engage simultaneously into the gearing (22) and into the clutch gearing (3, 4).

3. Sliding sleeve according to claim 1, **characterised in that** the tooth profile (18, 26) comprises radially inwards oriented teeth (20a, 21 a, 27a, 28a) that, in use, mesh with radially outwards oriented teeth (22a) of the gearing (22).

4. Sliding sleeve according to claim 1 or 2, **characterised in that** the tooth profile (18, 26) comprises radially inwards oriented teeth (20a, 21a, 27a, 28a) that, in use, mesh with radially outwards oriented teeth (3a, 4a) of the clutch gearing (3, 4).

5. Sliding sleeve according to claim 1, **characterised in that** the joint (19) is a weld joint.

6. Sliding sleeve according to claim 1, **characterised in that** the joint (29) is at least a combination of a positive engagement and a weld joint.

7. Gearshift clutch having a sliding sleeve according to claim 1, **characterised in that** the transmission element (2) is a sleeve carrier (8) seated on a transmission shaft (5) and the clutch gearing (3, 4) is associated rotationally fast to a gearwheel (6, 7) that can be selected through the gearshift clutch (1).

## Revendications

1. Manchon coulissant (9) d'un embrayage (1) pour la transmission de couples de rotation entre un élément de transmission (2) qui peut tourner autour d'un axe de rotation (1a) et une denture d'engrenage (3, 4) qui peut tourner autour de l'axe de rotation (1a), le manchon coulissant (9) comprenant un corps de base (16, 25) qui est fait à partir d'un feuillard en tôle qui est cintré en forme circulaire et comprend un profil denté (18, 26) composé d'une pluralité de dents (20a, 21a, 22a, 27a, 28a) qui sont adjacentes, l'une à l'autre, au moins dans la direction périphérique, le corps de base (16, 25) comprenant, entre une première dent (20a, 27a) et une seconde dent (20a, 27a), une liaison (19, 29) des deux extrémités (16a, 16b) réunies du feuillard en tôle qui est cintré en forme circulaire, et le manchon coulissant (9), afin de transmettre les couples de rotation par l'intermédiaire du profil denté (18, 26), s'engageant, en même temps, dans une denture (22) sur l'élément de transmission (2) et dans la denture d'engrenage (3, 4), de sorte que l'élément de transmission (2) et la denture d'engrenage (3, 4) sont immobilisés en rotation, l'un sur l'autre, **caractérisé en ce que** le profil denté (18, 26) comprend au moins un premier groupe (20, 27) de dents (20a, 27a) et un seconde groupe (21, 28) de dents (21 a, 28a), **en ce que** ces deux groupes (20, 21, 27, 28) de dents (20a, 21 a, 27a, 28a) diffèrent, l'un de l'autre, au moins en ce qui concerne leur engagement lors de la transmission des couples de rotation, les dents (20a, 27a) du premier groupe (20, 27) s'engageant seulement dans la denture (22) sur l'élément de transmission (2) et les dents (21a, 28a) du second groupe (21, 28) s'engageant au moins dans la denture d'engrenage (3, 4), et **en ce que** le premier groupe (20, 27) est formé au moins par la première dent (20a, 27a) et par la seconde dent (20a, 27a).

2. Manchon coulissant selon la revendication 1, **caractérisé en ce que**, lors de la transmission des couples de rotation, les dents (21 a, 28a) du second groupe (21, 28) s'engagent en même temps dans la denture (22) et dans la denture d'engrenage (3, 4).

3. Manchon coulissant selon la revendication 1, **caractérisé en ce que** le profil denté (18, 26) comprend des dents (20a, 21a, 27a, 28a) qui sont orientées radialement vers l'intérieur et qui, en état d'utilisation, s'engrènent dans des dents (22a) de la denture (22) qui sont orientées radialement vers l'extérieur.

4. Manchon coulissant selon la revendication 1 ou 2, **caractérisé en ce que** le profil denté (18, 26) comprend des dents (20a, 21 a, 27a, 28a) qui sont orientées radialement vers l'intérieur et qui, en état d'utilisation, s'engrènent dans des dents (3a, 4a) de la denture d'engrenage (3, 4) qui sont orientées radialement vers l'extérieur.

5. Manchon coulissant selon la revendication 1, **caractérisé en ce que** la liaison (19) est un joint soudé.

6. Manchon coulissant selon la revendication 1, **caractérisé en ce que** la liaison (29) est au moins une combinaison d'une liaison à engagement positif et d'un joint soudé.

7. Embrayage ayant un manchon coulissant selon la revendication 1, **caractérisé en ce que** l'élément de transmission (2) est un support (8) de manchon disposé sur un arbre de transmission (5), et la denture d'engrenage (3, 4) est associée, de manière fixe en rotation, à une roue dentée (6, 7) qui peut être commutée par l'embrayage (1).
